# EUROPEAN PATENT SPECIFICATION

(11) **EP 3 408 001 B1**
(45) Date of publication and mention of the grant of the patent: **29.04.2020**
(21) Application number: 16705899.9
(22) Date of filing: 30.01.2016
(51) Int. Cl.: B01D 17/00, B08B 3/14, B23Q 11/10, B01D 29/66, B01D 36/02

(54) **INDUSTRIAL CLEANING INSTALLATION WITH A FILTER ARRANGEMENT AND CORRESPONDING PROCESS**
INDUSTRIELLE REINIGUNGSANLAGE MIT EINER FILTERANORDNUNG UND ENTSPRECHENDES VERFAHREN
INSTALLATION DE NETTOYAGE INDUSTRIELLE AVEC AGENCEMENT DE FILTRES, ET PROCÉDÉ CORRESPONDANT

(43) Date of publication of application: 05.12.2018
(73) Proprietor: Elwema Automotive GmbH, 73479 Ellwangen (DE)
(72) Inventor: ALVAREZ, Antonio, 52224 Stolberg (DE); SONNTAG, Dietmar, 52152 Simmerath (DE)
(74) Representative: Lippert Stachow Patentanwälte Rechtsanwälte
(86) International application number: PCT/EP2016/052009
(87) International publication number: WO 2017/129269

(56) References cited:
- EP-A1- 1 020 235
- DE-A1- 19 515 710
- US-A- 5 346 629

## Description

### TECHNICAL FIELD

The present invention generally relates to the field of industrial cleaning of machined workpieces, and more particularly to method and industrial installation for removing waste matter from the cleaning liquid for use in subsequent cleaning of the machined workpieces.

The process of machining a metal workpiece to produce finished parts, for example engine and transmission components, such as cylinder heads, cylinder blocks, gearbox-casings etc., requires that a cutting tool of some sort is used to remove material from the workpiece to achieve the desired shape of the finished part. The machining operation may include drilling, milling, grinding or turning. After these machining operations burrs remain on the workpiece which are raised edges or small pieces of material remaining attached to the workpiece. These must be removed along with any remaining cutting chips and other particle matter from the machining process. Because the machining process may also require the use of lubricants, chip removers, rust inhibitors and coolants these residues must also be removed from the part after machining. These residues may particularly remain in holes or recesses when machining complicated shapes. A cleaning process is therefore carried out for removing all this unwanted material from the workpiece. The cleaning process involves for example subjecting the machined part to a jet of cleaning liquid. The unwanted waste material from the machined workpiece is then carried away by the cleaning liquid. The cleaning liquid may thus contain oil and particulate matter. The term "contaminated cleaning liquid" is used hereafter to describe the mixture of used cleaning liquid containing oil and/or particulate matter. The cleaning liquid should be recycled for economic and environmental reasons so that it can be reintroduced through the cleaning jets to clean the workpiece. The recycling of the cleaning liquid involves a system of filters and separators to remove the oil and particulate matter from the cleaning liquid before it is reused.

### BACKGROUND ART

DE 195 15 710 A1 describes a lubricant recycling system comprising a particle filter, an oil separator and a pump to convey the filtrate from the filter to the oil separator.

In a closed loop industrial cleaning system a cleaning liquid is used for cleaning machined parts. This is preferably an aqueous cleaning solution for environmental reasons. After the cleaning liquid has been used in a cleaning bath where the machined parts are cleaned the cleaning system must remove the contaminants from the cleaning liquid. The useful life of the cleaning liquid can thus be extended and the quantity of waste to dispose of can be minimised. There are several different methods and systems for removing contaminants from cleaning solutions. The methods often depend on the contaminant size. Particulate matter may be removed using settling tanks, chip baskets, and media or canister filters, whereas oils are removed using, for example, skimmers or coalescers.

U.S. Patent no. 5,346,629 describes a method of cleaning a contaminated backwashing liquid which contains impurities removed from filter means by backflushing said filter means with said backwashing liquid. The method is mainly aimed at separating particulate contaminants by sedimentation and applying pressure. It is not readily suitable for removing oil-like contaminants such as emulsified oils and/or fats.

Japanese patent application JP 2007-113072 discloses an industrial installation for cleaning of machined parts such as a cylinder block and cylinder head of an engine. The installation comprises a robot arm which is able to pick up machined workpieces from a conveyor belt and carry them into a cleaning bath containing cleaning solution. The cleaning bath has nozzles arranged in different positions for jetting cleaning liquid onto the workpiece. Cleaning solution is supplied from a main tank by a pump to the nozzles. The sludge and used cleaning solution containing cutting chips and other particle matter is pumped from the bottom of the cleaning bath through a drainage pipe and supplied directly to a filtration tank of a filter. A scraper-type chip conveyor is arranged in the filter tank. The scraper-type chip conveyor comprises a belt with scraper elements attached to it at regular intervals. As the conveyor belt turns the scrapers scrape any chips and other particle matter from the bottom of the filtration tank up a ramp and out of the filtration tank into a suitable container ready for disposal. The filtration tank also contains a drum filter which uses a cloth to filter out particles suspended in the cleaning liquid in the cleaning tank and supplies the filtered cleaning liquid back to the main tank ready for it to be pumped through the cleaning nozzles. The system described in JP2007-113072 does not include any installation for separating and removing oil from the cleaning liquid either.

As mentioned above, systems are known which use an oil into the oil separator which separates the oil from the cleaning solution. The oil is then pumped to an oil container, and the cleaning solution is pumped back to the contaminated liquid tank. Contaminated liquid is also pumped from the contaminated liquid tank to a filter to separate out the contaminating particles such as cutting chips, burrs, and fine particles. With this system it is possible to separate out sufficient contaminants from the cleaning liquid, so that it can be reused. The system is however inefficient as the oil and cleaning liquid mixture is pumped from the contaminated liquid tank to the oil separator, requiring a pump, which results in high system running costs. As the contaminated liquid containing solid matter and coarse sludge is fed to the oil separator, the oil separator also has to be made to cope with this particulate matter or there needs to be an additional filter for particle matter upstream of the oil separator. This system therefore requires good maintenance, increasing process costs.

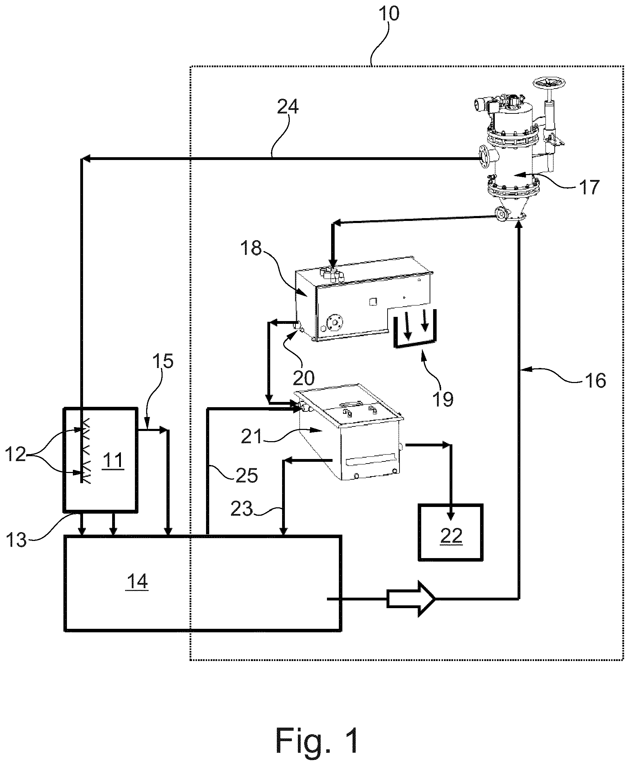

European patent application EP 1 020 235 A1 as closest prior art teaches an installation according to the claim preamble. This installation has a primary filter stage with a backwash filter (Fig.1: 3.2) and a secondary filter stage with a filter device (Fig.1: 4, 7) for receiving backwashed contaminated cleaning liquid from the backwash filter and removing solid matter therefrom. Furthermore, an oil separator (Fig.1: 13, 13.1-13.2) receives contaminated liquid from the secondary filter stage.

As in the prior art solutions discussed above, the installation of EP 1 020 235 A1 also requires a pump (Fig.1: 12) to pump contaminated liquid from a tank in the secondary filter device to the oil separator and has further components of a bath treating unit (Fig.1: 4) in the fluid path to the oil separator.

Accordingly, the design in EP 1 020 235 A1 is similar to the design of the JP 2007-113072.

### TECHNICAL PROBLEM

In view of the prior art, it is an object of the present invention to provide an installation and a method for separating both oil and particulate matter from a cleaning liquid used for cleaning machined parts with an increased efficiency.

### GENERAL DESCRIPTION OF THE INVENTION

In order to overcome the problems mentioned above, the present invention proposes an industrial installation for cleaning workpieces, in particular for cleaning components of engines and transmission components using a cleaning liquid, according to claim 1 and a corresponding industrial process according to claim 9.
The industrial installation as proposed in claim 1 includes a filter arrangement comprising a first filter which is a backwash filter for receiving contaminated cleaning liquid, and a second filter arranged for receiving backwashed contaminated cleaning liquid from the backwash filter, and for removing solid matter from the contaminated cleaning liquid. The installation further comprises an oil separator fluidly connected to the second filter and arranged for receiving contaminated cleaning liquid and for removing oil from the contaminated cleaning liquid. The inventors have found that by arranging the oil separator to receive contaminated cleaning liquid directly from the second filter, instead of from a tank which is directly fed by the outlet from a cleaning bath, the path distance for the recycled cleaning liquid can be reduced. The second filter is arranged above, in particular on top of, the oil separator. It is also not necessary to provide a pump to pump large amounts of contaminated cleaning liquid from the contaminated cleaning liquid tank to the oil separator. The invention therefore results in an increased energy efficiency and lower running costs for the cleaning installation. The cleaning liquid can be any liquid suitable for cleaning machined workpieces, for example an aqueous cleaning liquid using water as a solvent.

In a further embodiment a contaminated cleaning liquid tank is provided for receiving contaminated cleaning liquid from a cleaning bath, whereby the backwash filter is arranged to receive contaminated cleaning liquid directly from the contaminated cleaning liquid tank, and the backwash filter is arranged to supply filtered cleaning liquid to cleaning nozzles or to a cleaning bath for cleaning a workpiece. The contaminated cleaning liquid tank may advantageously be provided with an oil skimmer for skimming an emulsion of oil and cleaning liquid from the surface of the cleaning liquid tank and supplying it to the oil separator. This method has the advantage that the average fluid path length for the oil before it is separated from the cleaning liquid in the oil separator is reduced.

In a further preferred embodiment the second filter is a belt filter. The belt filter has the advantage that it is simple and reliable with low maintenance needs. A belt filter can also be adjusted to separate the solid matter from the cleaning liquid at required rate, depending on the workpieces to be cleaned. In another embodiment the second filter is a combination of at least two filters, whereby each filter is configured to optimally remove a different size particle. This has the advantage that a wide range of debris particle sizes can be efficiently separated from the cleaning liquid.

The oil separator is preferably a gravity separation device. This has the benefit that it is a simple, low maintenance device, so that the running costs can be minimized. The oil separator is preferably fluidly connected to the contaminated cleaning liquid tank for returning cleaning liquid to the contaminated cleaning liquid tank and fluidly connected to an oil container for collecting the separated oil.

In a further preferred embodiment the second filter is arranged on top of the oil separator which is arranged on top of the contaminated cleaning liquid tank such that gravity assists the flow of contaminated cleaning liquid from the second filter to the contaminated cleaning liquid tank. This arrangement has the advantage that the path lengths for the contaminated cleaning liquid are as short as possible and energy required to pump the contaminated cleaning liquid through the system is reduced.
Furthermore the contaminated cleaning liquid tank may comprise an oil skimmer for removing oil from the surface of the contaminated cleaning liquid in the contaminated cleaning liquid tank. In this preferred embodiment an emulsion of oil and cleaning liquid can be skimmed from the top of the contaminated cleaning liquid tank and fed to the oil separator. The oil separator therefore receives an emulsion of contaminated liquid and oil from the second filter and from the contaminated cleaning liquid tank, whereby this arrangement has a synergetic effect to optimally remove the oil from the contaminated cleaning liquid in a short path.
A corresponding industrial process for separating particle matter and oil from a cleaning fluid for use in cleaning machined parts is claimed in claim 9. The process comprises the steps of:
a) feeding contaminated cleaning liquid to a backwash filter,
b) feeding backwashed contaminated cleaning liquid from the backwash filter to a second filter which removes solid matter from the contaminated cleaning liquid,
   and,
c) feeding the contaminated cleaning liquid from the second filter directly and through a fluid path without a pump to an oil separator where oil is removed from the contaminated cleaning liquid , the second filter being arranged above, in particular on top of, the oil separator.
In a further aspect of the invention a filter arrangement is provided for use in an industrial installation, comprising: a first filter which is a backwash filter for receiving contaminated cleaning liquid, a second filter arranged for receiving backwashed contaminated cleaning liquid from the backwash filter, and for removing solid matter from the contaminated cleaning liquid, and an oil separator arranged for receiving contaminated cleaning liquid and for removing oil from the contaminated cleaning liquid, the oil separator being fluidly connected to the second filter and arranged for receiving the contaminated cleaning liquid directly from the second filter.

As set out hereinabove, the proposed industrial installation and process are not exclusively but particularly suitable for industrial application in the field of automotive and gearbox manufacture.

### BRIEF DESCRIPTION OF THE DRAWINGS

A preferred and non-limiting embodiment of the invention will now be described, by way of example, with reference to the accompanying drawings, in which:
FIG.1 is a schematic illustration of a process for separating particle matter and oil from a cleaning liquid for use in cleaning machined parts according to one embodiment of the invention.
FIG.2 is a schematic perspective view of an oil separator for use in an industrial installation according to one embodiment of the invention;
FIG.3 is a partial perspective view showing the filter arrangement according to Fig.1 in an industrial installation for cleaning workpieces, in particular for cleaning components of engines and transmission components.

### DESCRIPTION OF A PREFERRED EMBODIMENT

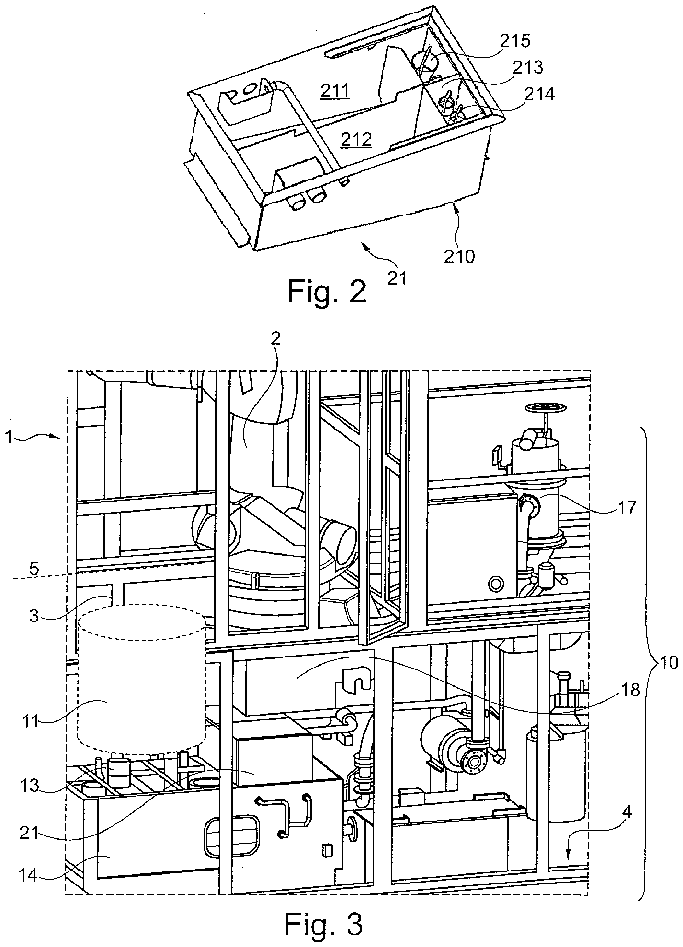

Referring to FIG.1, which schematically shows a filter arrangement 1 for an industrial cleaning installation, initially an industrial process is described for cleaning machined workpieces. The workpieces are for example engine or transmission components such as cylinder blocks, and have been machined for example by drilling, milling, grinding or turning. The machining process may require the use of lubricants, chip removers, rust inhibitors and coolants. Residues of these liquids along with any chips or burrs remaining on the workpiece must therefore be removed from the part after machining. For this purpose the workpiece is subject to a cleaning operation in a cleaning receptacle 11 containing a bath of cleaning liquid. The workpiece may be moved to the cleaning receptacle 11 by a conveyor or by an industrial robot (see FIG.3). Cleaning liquid, which may be water or an aqueous cleaning liquid using water as a solvent is sprayed onto the work piece through a plurality of nozzles 12. The cleaning liquid is supplied from the clean side of a first filter which is a backwash filter 17 through a conduit 24 to the plurality of cleaning nozzles 12. The contaminated cleaning liquid, which may contain oil and machining chips etc. washed of the workpiece by the action of the spraying nozzles 12, is discharged via a valve through an outlet 13 at the bottom of the cleaning receptacle 11 and supplied through a conduit to a contaminated cleaning liquid tank 14. The cleaning receptacle 11 also comprises an overflow outlet 15, which is also connected by a conduit to the contaminated cleaning liquid tank 14. Contaminated cleaning liquid is pumped from the tank 14 through a conduit 16 to the backwash filter 17 where liquid can be pumped backwards through the filter media to wash out a mixture of machining chips, emulsion of oil and cleaning liquid and sludge from the backwash filter 17 through a conduit into a second filter 18.

The second filter 18 can be any filter suitable for separating solids from the contaminated cleaning liquid. In the embodiment shown, this is a belt filter. A belt filter conveys solid material, i.e. chips and sludge, out of the filter tank into a waste container 19. The belt filter has the advantage that it is simple and reliable with low maintenance costs. There are various types of belt filter which can be used depending on the material being machined. A scraper-type belt filter is preferably used in this embodiment as the debris which is washed from the machined parts comprises primarily smaller chips which can nest together. When these small chips are backwashed from the backwash filter 17 into the belt filter tank they fall directly through the belt to the bottom of the tank and are scraped by scrapers attached to the belt at regular intervals to the discharger of the conveyor belt. The drag debris is then discharged into the waste container 19 for disposal. It is however also possible that the second filter 18 is a combination of different types of filters, whereby each filter is designed to optimally remove a different size particle. The belt filter could for example be combined with a drum filter for additional filtering of coarse sludge.

The second filter 18 is provided with an outlet 20 for the filtered contaminated cleaning liquid. The contaminated cleaning liquid at this stage has substantially all the chips and coarse sludge removed from it, however a mixture of emulsion and fine sludge remain in the cleaning liquid. This contaminated cleaning liquid is then fed according to the invention directly to an oil separator 21 as indicated by the arrows in FIG.1.

The oil separator 21 can be any device suitable for separating oil from the cleaning liquid. In the preferred embodiment this is a gravity separation device, as schematically illustrated in FIG.2, which works on the principal that the density differential between two immiscible liquids leads to one of them rising above the other. In this case the emulsion of oil and cleaning liquid is introduced through an inlet into a tank 210 which has a plurality of chambers 211, 212. The mixture is introduced into a settling chamber 211 which gives the oil time to rise through the cleaning liquid. From this chamber the oil and the water flow into a pre-separation chamber 212. A baffle 213 is provided between the pre-separation chamber and the cleaning liquid outlet 214 to prevent oil at the surface from flowing through the cleaning liquid outlet 214. The oil at the surface is then funnelled off through an oil outlet 215 into an oil container 22.

Alternatively the oil separator could be a coalescing separator which is essentially a gravity separator comprising a coalescing plate in order to achieve greater separation efficiency.

The cleaning liquid outlet 214 from the oil separator is returned by a conduit as indicated by the arrows 23 in FIG.1 to the contaminated cleaning liquid tank 14, thus closing the contaminated cleaning liquid circuit.

The contaminated cleaning liquid tank 14 is preferably provided with an oil skimmer for skimming emulsion from the surface of the contaminated cleaning liquid in the tank 14, whereby a pump is provided to pump the skimmed emulsion into the oil separator through a skimmed oil conduit 25. Therefore in this preferred embodiment the oil separator 21 receives an emulsion of contaminated liquid and oil from the second filter 18 and from the contaminated cleaning liquid tank 14, whereby this arrangement has a synergetic effect to optimally remove the oil from the contaminated cleaning liquid in a short path.

The second filter 18 is positioned directly on top of the oil separator 21 which is arranged directly on top of the contaminated cleaning liquid tank 14 so that gravity assists the flow of contaminated cleaning liquid from the second filter 18 to the contaminated cleaning liquid tank 14. The path lengths for the contaminated cleaning liquid are thus kept short and energy required to pump the contaminated cleaning liquid through the system is reduced.

FIG.3 partially illustrates an industrial cleaning installation 1 of a design as generally known e.g. from the brochure entitled "Ideen fur die Zukunft" by ELWEMA Automotive GmbH or further from EP 2 523 761 B1, except for the filter arrangement 10 described hereinabove. The installation 1 has an industrial robot 2 mounted on a raised platform 5 of a support structure 3 for handling the workpieces to be cleaned in one or more cleaning receptacles 11, schematically shown by dashed lines, which are suspended from the platform 5. The contaminated cleaning liquid tank 14 is arranged on a base 4 of the support structure 3 at factory floor level, immediately below the cleaning receptacles 11 to reduce conduit lengths downstream the cleaning bath outlets 13. The second filter 18 and oil separator 21 are arranged on top of the contaminated cleaning liquid tank 14, whereas the backwash filter 17, which is subject to more frequent maintenance is mounted on the platform to be readily accessible from the outside. The filter arrangement 10, as shown in FIG.3, can be integrated in an automatic cleaning installation 1 without requiring any significant footprint, i.e. factory floor surface area.

### LEGEND (LIST OF REFERENCE SIGNS):

### FIG. 1

10 filter arrangement
11 cleaning receptacle
12 cleaning nozzles
13 cleaning bath outlet
14 contaminated cleaning liquid tank
15 overflow outlet
16 conduit
17 backwash filter
18 second filter
19 waste container
20 second filter outlet
21 oil separator
22 oil container
23 return conduit
24 conduit
25 skimmed oil conduit

### FIG.2

210 oil separator tank
211 a settling chamber
212 pre-separation chamber
213 baffle
214 cleaning liquid outlet
215 oil outlet funnel

### FIG.3

1 industrial cleaning installation
2 industrial robot
3 support structure
4 base
5 platform
10 filter arrangement
11 cleaning receptacle
13 cleaning bath outlet
14 contaminated cleaning liquid tank
17 backwash filter
18 second filter
21 oil separator

## Claims

1. Industrial installation for cleaning workpieces, in particular for cleaning components of engines and transmission components using a cleaning liquid, the installation including a filter arrangement comprising:
a first filter which is a backwash filter (17) for receiving contaminated cleaning liquid,
a second filter (18) arranged for receiving backwashed contaminated cleaning liquid from the backwash filter (17), and for removing solid matter from the contaminated cleaning liquid, and
an oil separator (21) arranged for receiving contaminated cleaning liquid and for removing oil from the contaminated cleaning liquid, wherein the oil separator (21) is fluidly connected to the second filter (18) ;
**characterised in that**
the oil separator (21) is arranged for receiving the contaminated cleaning liquid directly from the second filter (18) without a pump in the fluid path from the second filter (18) to the oil separator (21), the second filter (18) being arranged above, in particular on top of, the oil separator (21) .

2. Industrial installation according to any one of the preceding claims, wherein a contaminated cleaning liquid tank (14) is provided for receiving contaminated cleaning liquid from a cleaning bath (10), whereby the backwash filter (17) is arranged to receive contaminated cleaning liquid directly from the contaminated cleaning liquid tank (14), and the backwash filter (17) is arranged to supply filtered cleaning liquid to cleaning nozzles (12) or to the cleaning bath (10) for cleaning a workpiece.

3. Industrial installation according to claim 1 or 2, whereby the second filter (18) is a belt filter.

4. Industrial installation according to claim 1 or 2, whereby the second filter (18) is a combination of at least two filters, whereby each filter is configured to optimally remove a different size particle.

5. Industrial installation according to any one of the preceding claims, whereby the oil separator (21) is a gravity separation device.

6. Industrial installation according to claim 2, whereby the oil separator (21) is fluidly connected to the contaminated cleaning liquid tank (14) for returning cleaning liquid to the contaminated cleaning liquid tank (14) and fluidly connected to an oil container for collecting the separated oil.

7. Industrial installation according to claim 2, whereby the contaminated cleaning liquid tank (14) comprises an oil skimmer for removing oil from the surface of the contaminated cleaning liquid in the contaminated cleaning liquid tank (14).

8. Industrial installation according to claim 7, whereby a pump is arranged to pump the liquid skimmed by the oil skimmer to the oil separator (21).

9. An industrial process for separating particle matter and oil from a cleaning liquid for use in cleaning machined parts, comprising
a) feeding contaminated cleaning liquid to a backwash filter (17),
b) feeding backwashed contaminated cleaning liquid from the backwash filter (17) to a second filter (18) which removes solid matter from the contaminated cleaning liquid, said process being **characterised by**,
c) feeding the contaminated cleaning liquid from the second filter (18) directly and through a fluid path without a pump to an oil separator (21) where oil is removed from the contaminated cleaning liquid, the second filter (18) being arranged above, in particular on top of, the oil separator (21).

10. The process according to claim 9, comprising the step of pumping contaminated cleaning liquid from a contaminated cleaning liquid tank (14) directly to the backwash filter (17), and supplying filtered cleaning liquid from the clean side of the backwash filter (17) to cleaning nozzles (12) or a cleaning bath (10) for cleaning a workpiece.

11. The process according to claim 9 or 10, whereby the process of removing solid matter from the contaminated cleaning liquid is carried out using a belt filter.

12. The process according to one of claims 9 to 11, whereby oil is separated from the cleaning liquid in the oil separator (21) by gravity separation.

13. The process according to one of claims 10 to 12, comprising the step of feeding the cleaning liquid separated from the oil in the oil separator (21) to a contaminated cleaning liquid tank (14), and feeding the separated oil to an oil container.

14. The process according to claim 10 or 13, comprising the step of removing liquid from the surface of the contaminated cleaning liquid in the contaminated cleaning liquid tank (14) by skimming and supplying the skimmed liquid to the oil separator (21).

## Patentansprüche

1. Industrieanlage zur Reinigung von Werkstücken, insbesondere zur Reinigung von Motorenkomponenten und Getriebekomponenten unter Verwendung einer Reinigungsflüssigkeit, wobei die Anlage eine Filteranordnung beinhaltet, umfassend:
einen ersten Filter, welcher ein Rückspülfilter (17) zur Aufnahme von kontaminierter Reinigungsflüssigkeit ist, einen zweiten Filter (18), welcher ausgebildet ist die rückgespülte kontaminierte Reinigungsflüssigkeit vom Rückspülfilter (17) aufzunehmen und ausgebildet ist zur Entfernung von Feststoffen aus der kontaminierten Reinigungsflüssigkeit, und
einen Ölabscheider (21), welcher ausgebildet ist zur Aufnahme der kontaminierten Reinigungsflüssigkeit und zum Entfernen von Öl aus der kontaminierten Reinigungsflüssigkeit, wobei der Ölabscheider (21) mit dem zweiten Filter (18) flüssigkeitsleitend verbunden ist;
**dadurch gekennzeichnet, dass**
der Ölabscheider (21) ausgebildet ist zur Aufnahme der kontaminierten Reinigungsflüssigkeit unmittelbar vom zweiten Filter (18) ohne Pumpe im Flüssigkeitspfad vom zweiten Filter (18) zum Ölabscheider (21), wobei der zweite Filter (19) über dem, insbesondere auf dem Ölabscheider (21) angeordnet ist.

2. Industrieanlage nach einem der vorangegangenen Ansprüche, wobei ein Schmutzflüssigkeitstank (14) vorgesehen ist zur Aufnahme von kontaminierter Reinigungsflüssigkeit aus einem Reinigungsbad (10), wobei der Rückspülfilter (17) ausgebildet ist zur Aufnahme von kontaminierter Reinigungsflüssigkeit direkt vom Schmutzflüssigkeitstank (14) und der Rückspülfilter (17) ausgebildet ist zur Zuführung von gefilterter Reinigungsflüssigkeit zu Reinigungsdüsen (12) oder zu dem Reinigungsbad (10) zur Reinigung eines Werkstücks.

3. Industrieanlage nach Anspruch 1 oder 2, wobei der zweite Filter (18) ein Bandfilter ist.

4. Industrieanlage nach Anspruch 1 oder 2, wobei der zweite Filter (18) eine Kombination aus zumindest zwei Filtern ist, wobei jeder Filter dazu eingerichtet ist Teilchen einer anderen Größe optimal zu entfernen.

5. Industrieanlage nach einem der vorangegangenen Ansprüche, wobei der Ölabscheider (21) eine Schwerkraft-Trennvorrichtung ist.

6. Industrieanlage nach Anspruch 2, wobei der Ölabscheider (21) mit dem Schmutzflüssigkeitstank (14) flüssigkeitsleitend verbunden ist zur Rückführung von Reinigungsflüssigkeit zum Schmutzflüssigkeitstank (14) und der Ölabscheider (21) zum Auffangen von separiertem Öl mit einem Ölbehälter flüssigkeitsleitend verbunden ist.

7. Industrieanlage nach Anspruch 2, wobei der Schmutzflüssigkeitstank (14) einen Ölabstreifer umfasst, zur Entfernung von Öl von der Oberfläche der im Schmutzflüssigkeitstank (14) befindlichen kontaminierten Reinigungsflüssigkeit.

8. Industrieanlage nach Anspruch 7, wobei eine Pumpe ausgebildet ist zum Pumpen von vom Ölabstreifer abgestriffener Flüssigkeit in den Ölabscheider (21).

9. Industrieverfahren um Partikelmaterial und Öl von einer Reinigungsflüssigkeit zur Reinigung von bearbeiteten Teilen zu separieren, umfassend:
a) Zuführen einer kontaminierten Reinigungsflüssigkeit zu einem Rückspülfilter (17),
b) Zuführen von rückgespülter kontaminierter Reinigungsflüssigkeit vom Rückspülfilter (17) zu einem zweiten Filter (18), welcher Feststoffe aus der kontaminierten Reinigungsflüssigkeit entfernt, **gekennzeichnet dadurch, dass**
c) die Zuführung der kontaminierten Reinigungsflüssigkeit vom zweiten Filter (18) unmittelbar und durch einen Flüssigkeitspfad ohne Pumpe zu einem Ölabscheider (21), in welchem Öl von der kontaminierten Reinigungsflüssigkeit entfernt wird, verläuft, wobei der zweite Filter (18) über, insbesondere auf, dem Ölabscheider (21) angeordnet ist.

10. Industrieverfahren nach Anspruch 9, umfassend den Schritt des Pumpens von kontaminierter Reinigungsflüssigkeit von einem Schmutzflüssigkeitstank (14) direkt zum Rückspülfilter (17) und Zuführen von gefilterter Reinigungsflüssigkeit von der sauberen Seite des Rückspülfilters (17) zu Reinigungsdüsen (12) oder zu einem Reinigungsbad (10) zur Reinigung eines Werkstücks.

11. Industrieverfahren nach einem der Ansprüche 9 oder 10, wobei das Entfernen von Feststoffen aus der kontaminierten Reinigungsflüssigkeit durch einen Bandfilter ausgeführt wird.

12. Industrieverfahren nach einem der Ansprüche 9 bis 11, wobei Öl durch Separation von der Reinigungsflüssigkeit in dem Ölabscheider (21) mittels Schwerkraft-Trennung entfernt wird.

13. Industrieverfahren nach einem der Ansprüche 10 bis 12, umfassend den Schritt des Zuführens von Reinigungsflüssigkeit, die im Ölabscheider (21) von Öl separiert wurde, zu einem Schmutzflüssigkeitstank (14) und Zuführen des separierten Öls in einen Ölbehälter.

14. Industrieverfahren nach einem der Ansprüche 10 oder 13, umfassend den Schritt des Entfernens von Flüssigkeit von der Oberfläche der kontaminierten Reinigungsflüssigkeit im Schmutzflüssigkeitstank (14) durch Abstreifen und Zuführen der abgestriffenen Flüssigkeit in den Ölabscheider (21).

## Revendications

1. Installation industrielle pour le nettoyage de pièces, en particulier pour le nettoyage de composants de moteurs ou de composants de transmission à l'aide d'un liquide de nettoyage, l'installation comprenant un dispositif de filtrage qui comprend:
un premier filtre qui est un filtre de lavage à contre-courant (17) destiné à recevoir du liquide de nettoyage contaminé,
un second filtre (18) disposé pour recevoir du filtre de lavage à contre-courant (17) du liquide de nettoyage contaminé qui a été lavé à contre-courant et configuré pour éliminer des matières solides du liquide de nettoyage contaminé, et
un séparateur d'huile (21) disposé pour recevoir du liquide de nettoyage contaminé et pour éliminer de l'huile du liquide de nettoyage contaminé, dans lequel le séparateur d'huile (21) est relié fluidiquement au second filtre (18);
**caractérisé en ce que**
le séparateur d'huile (21) est agencé pour recevoir du liquide de nettoyage contaminé directement du second filtre (18) sans qu'une pompe ne soit prévue dans le chemin du fluide allant du second filtre (18) au séparateur d'huile (21), le second filtre (18) étant agencé au-dessus du séparateur d'huile (21), en particulier sur le séparateur d'huile (21).

2. Installation industrielle selon l'une des revendications précédentes, dans laquelle un réservoir de liquide de nettoyage contaminé (14) est prévu pour recevoir du liquide de nettoyage contaminé en provenance d'un bain de nettoyage (10), le filtre de lavage à contre-courant (17) étant disposé pour recevoir du liquide de nettoyage contaminé directement du réservoir de liquide de nettoyage contaminé (14), et dans laquelle le filtre de lavage à contre-courant (17) est agencé pour fournir du liquide de nettoyage filtré à des buses de nettoyage (12) ou au bain de nettoyage (10) pour le nettoyage d'une pièce.

3. Installation industrielle selon la revendication 1 ou 2, dans laquelle le second filtre (18) est un filtre à bande.

4. Installation industrielle selon la revendication 1 ou 2,
le second filtre (18) est une combinaison d'au moins deux filtres, chaque filtre étant configuré pour éliminer de manière optimale des gammes de particules de taille différente.

5. Installation industrielle selon l'une quelconque des revendications précédentes, dans laquelle le séparateur d'huile (21) est un dispositif de séparation par gravité.

6. Installation industrielle selon la revendication 2, dans laquelle le séparateur d'huile (21) est relié fluidiquement au réservoir de liquide de nettoyage contaminé (14) pour renvoyer le liquide de nettoyage dans le réservoir de liquide de nettoyage contaminé (14) et est relié fluidiquement à un réservoir d'huile pour recueillir de l'huile séparée.

7. Installation industrielle selon la revendication 2, dans laquelle le réservoir de liquide de nettoyage contaminé (14) comprend un écrémeur d'huile pour enlever de l'huile de la surface du liquide de nettoyage contaminé dans le réservoir de liquide de nettoyage contaminé (14).

8. Installation industrielle selon la revendication 7, dans laquelle une pompe est disposée pour pomper du liquide écrémé par l'écrémeur d'huile vers le séparateur d'huile (21).

9. Procédé industriel de séparation de particules et d'huile d'un liquide de nettoyage destiné à être utilisé pour le nettoyage de pièces usinées, comprenant :
a) l'alimentation d'un filtre de lavage à contre-courant en un liquide de nettoyage contaminé (17),
b) l'alimentation du liquide de nettoyage contaminé lavé à contre-courant à partir du filtre de lavage à contre-courant (17) vers un second filtre (18) qui élimine des matières solides du liquide de nettoyage contaminé, ledit procédé étant **caractérisé par** l'étape de :
c) alimenter le liquide de nettoyage contaminé, à partir du second filtre (18) directement et par un chemin de fluide sans pompe, vers un séparateur d'huile (21) dans lequel de l'huile est retirée du liquide de nettoyage contaminé, le second filtre (18) étant disposé au-dessus du séparateur d'huile (21), en particulier sur le séparateur d'huile (21).

10. Le procédé selon la revendication 9, comprenant l'étape de pompage du liquide de nettoyage contaminé à partir d'un réservoir de liquide de nettoyage contaminé (14) directement vers le filtre de lavage à contre-courant (17), et l'alimentation du liquide de nettoyage filtré à partir du côté propre du filtre de lavage à contre-courant (17) vers des buses de nettoyage (12) ou vers un bain de nettoyage (10) pour nettoyer une pièce.

11. Le procédé selon la revendication 9 ou 10, par lequel le processus d'élimination des matières solides du liquide de nettoyage contaminé est effectué en utilisant un filtre à bande.

12. Le procédé selon l'une des revendications 9 à 11, selon lequel de l'huile est séparée du liquide de nettoyage dans le séparateur d'huile (21) grâce à une séparation par gravité.

13. Le procédé selon l'une des revendications 10 à 12, comprenant en outre l'étape d'alimenter le liquide de nettoyage séparé de l'huile dans le séparateur d'huile (21) vers un réservoir de liquide de nettoyage contaminé (14), et à alimenter de l'huile séparée vers un conteneur d'huile.

14. Le procédé selon la revendication 10 ou 13, comprenant en outre l'étape d'enlever le liquide de la surface du liquide de nettoyage contaminé dans le réservoir de liquide de nettoyage contaminé (14) par écrémage et à fournir le liquide ainsi écrémé au séparateur d'huile (21).
